# EUROPEAN PATENT APPLICATION

(11) **EP 1 193 603 A1**
(43) Date of publication of application: **03.04.2002**
(21) Application number: 00935660.1
(22) Date of filing: 13.06.2000
(51) Int. Cl.: G06F 13/00, G06F 15/00, G06F 17/30

(54) **INFORMATION COLLECTION SYSTEM AND INFORMATION COLLECTION METHOD ON NETWORK, EACH USING TECHNIQUE OF INTERNET, AND RECORDING MEDIUM IN WHICH THE INFORMATION COLLECTION METHOD IS RECORDED**

(30) Priority: 14.06.1999 JP 16708299
(71) Applicant: Nihon Business Data Processing Center Co., Ltd., Kobe-shi, Hyogo 650-0032 (JP)
(72) Inventor: TAKEDA, Masahiro, Chuo-ku Kobe-shi Hyogo 650-0032 (JP)
(74) Representative: Frost, Alex John
(86) International application number: JP0003828
(87) International publication number: WO0077647

(57) **Abstract**

In a network system on the Internet to which a server 10 of an information provider, a client 20 viewing information in server 10 and a server 30 of an information collector 8 are connected, an information collecting instruction script is written in information 11 provided by the server 10 of information provider 6. When the client 20 of information viewer 7 accesses to the server 10 of the information provider 6, the information collecting instruction script inserted in the homepage of the server 10 is automatically read, and information of client 20 and information of the access to the server 10 are transmitted to the server 30 of information collector 8. As a result, a system can be provided that can collect viewing state every time the information viewer views documents on the network utilizing internet technique such as homepages and electronic mails provided by the information provider.

## Description

### Technical Field

The present invention relates to a technique of information collection and analysis suitable for collecting detailed information of information viewing states by an unspecified number of viewers, for an information provider providing information on a network using internet technique, including an intranet.

### Background Art

Conventionally, a method of collecting information viewing states by information viewers has been known. As a method of collecting the information viewing states for a homepage, information viewing states of information viewers are collected at a server of an information provider, in the form of an access log or, alternatively, the information viewing states by the information viewers are collected to an information collection server by a client program, with the client program installed in a client of each information viewer. As a method of performing statistical processing of the collected information viewing states, an access log analysis software has been generally used. Here, the collecting process and statistical process are not always linked in terms of systems or data.

Further, in the method of collecting the information viewing states of information viewers for electronic mails provided by the information provider, a link to the homepage of the information provider is attached to the main text of the electronic mail, and only the opening state of the electronic mail is collected by the above described method of collecting information viewing states for the homepage only when the homepage is accessed through the link.

The method of collecting information viewing states of the information viewers in the form of an access log at the server of the information provider and the method of collecting information viewing states of the information viewers to the information collecting server through a client program by installing the client program in the client of each information viewer have the following problems. As it is not always in cooperation with the browsing program executed by the client of the information viewer, when the viewer visits the site second time or more, it is a general practice that contents of the server of the information provider obtained at the time of first visit are recorded in a temporarily storage area referred to as a cache of the browser program of the client of the information viewer or in a storage area of a proxy server, at the time of first visit. When the information viewer wishes to view the contents of the server of the information provider, the recorded contents of the cache are displayed as the contents of the server of the information provider, and physical access to the server of the information provider is not made. Therefore, at the time of second or following visit, the access log itself is not recorded, and therefore, detailed information such as the viewing time cannot be obtained.

When the information provider provides information on a rental server, it is generally impossible for the information provider to obtain the access log itself. Further, additional information such as sex, age, occupation and the like that cannot be generally obtained through the access log cannot be obtained, either.

In the method of collecting information viewing states by the information viewers at an information collecting server by a client program, with the client program installed in the client of the information viewer, the client program must be installed in the client of each information viewer for collecting the information, by supplying the client program to the information viewer using a storage medium such as a CD-ROM, or by automatically supplying the program through a homepage. In the method of supplying using the storage medium to the information viewer, it is sometimes the case that the information viewer does not install the software. In the latter method of automatically supplying through the homepage, a browser program of the information viewer may have a security check mechanism, so that the browser program asks the information viewer as to whether the client program should be installed or not, and the information viewer rejects install of the program. Considering such cases, it is not absolutely ensured that the client program itself is installed and operated in the client of the information viewer. This makes it difficult to collect the information viewing states of all unspecified number of viewers.

Even when the client program is installed, it is impossible to specify the cause of malfunction, if any, of the client program, as the client program is executed in the client of the information viewer. This also makes it difficult to collect the information viewing state of all unspecified number of viewers.

In the method of collecting information viewing states of the information viewers for the electronic mails provided by the information provider, the method is possible only when the homepage is accessed through the link to the homep age of the information provider attached to the body of the electronic mail. Therefore, an electronic mail left unopened cannot be collected as the information viewing state.

The present invention was made to solve the above described problems, and an object of the present invention is to enable collection of all viewing states, by ensuring an operation free of any influence of the cache, when the information viewer views documents on the network using the internet technique such as homepages and electronic mails provided by an information provider .

Another object of the present invention is to enable collection of information viewing states of all of unspecified number of information viewers viewing documents on the network using internet technique provided by a server of the information collector.

A still further object of the present invention is to enable collection of information viewing states of the information viewers, even when the information provider provides information by a rental server.

A still further object of the present invention is to improve method of providing documents on the network using internet technique such as homepages or electronic mails provided by the information provider.

A still further object of the present invention is to improve the method of providing documents on the network using internet technique such as homepages and electronic mails provided by the information provider so that it becomes possible for the information provider to know the viewing states of target information viewers and have information viewers view more information.

A still further object of the present invention is to make it possible for the information provider to know further viewing information of past information viewers, to improve the method of providing documents on the network using internet technique such as homepages and electronic mails provided by the information provider and to enable direct marketing to the information viewers.

A still further object of the present invention is to make it possible to know whether information collection is possible or not at one sight.

### Disclosure of the Invention

To the information collecting system on a network using internet technique in accordance with the present invention, a server of an information provider, a client viewing the server of the information provider and a server of an information collector are connected. The information collecting system includes means for inserting an information collecting instruction in information provided by information provider itself on its server, and the information collection server includes means for collecting viewing information of the clients in accordance with the inserted instruction when the server of the information provider is accessed and information of the server is viewed, and means for storing the collected data.

According to another aspect of the present invention, the method of collecting information on a network using internet technique collects information on a network using internet technique to which a server of an information provider, a client viewing the server of the information provider and a server of an information collector are connected. The method of collecting information includes the steps of: inserting a prescribed information collecting instruction in information provided by the information provider; collecting client viewing information at a server of the information collector in accordance with the inserted instruction, when the client accesses to the server of the information provider and views the information in the server; and storing the collected data in the server of the information collector.

According to a still further aspect of the present invention, a computer readable recording medium is loaded to a server of an information provider on a network using internet technique to which the server of the information provider, a client viewing the server of the information provider and a server of an information collector are connected. The recording medium has the server of the information provider operate to insert a prescribed information collecting instruction in the information provided by the information provider, and the information collecting instruction causes such an operation that when a client accesses the server of the information provider and views the information, information thereof is transmitted to the information collector server.

When the client accesses to the information providing server, prescribed information is collected from the client in accordance with the instruction inserted to the information provided by the information provider, and the collected information is transmitted to the information collecting server.

As the information collecting instruction is inserted in the information provided by the information provider at the server of the provider, when the client accesses to the server of the information provider and views the information, the client viewing information is collected and stored in the server of the information collector, in accordance with the inserted instruction.

As a result, information collecting system on the network using internet technique, information collecting method and computer readable recording medium that can collect all viewing states when information viewer views documents on the network using internet technique such as homepages and electronic mails provided by an information provider can be provided.

Preferably, the information collecting system further includes means for statistically processing the data collected by the viewing information collecting means, and the storing means stores the statistically processed data.

As the corrected data are statistically processed and stored, the collected data can be analyzed easily.

According to another aspect of the present invention, the server of the information collector has a gateway program for collecting prescribed information. When the client accesses to the server of the information provider and views information, sometimes additional information related to the client is entered. The server of the information collector collects and stores the additional information entered by the client, using the gateway program.

When additional information is entered as the information viewer views a document on the network using internet technique such as a homepage or an electronic mail provided by the information provider, the additional information is collected and stored, and therefore, such information can be utilized for the next business operation. More preferably, the additional information entered by the client that is collected and stored is stored in the server of the information provider.

When the additional information entered by the client is collected and stored only in the server of the information provider, there is no possibility that the additional information entered by the client is known by the information collector.

### Brief Description of the Drawings

Fig. 1 is a schematic diagram showing an over all configuration of the internet information collecting system in accordance with the present invention.
Fig. 2 is a flow chart representing an operation of the network information collecting system in the network using internet technique in accordance with the present invention.
Fig. 3 is a flow chart representing an operation of the network information collecting system in a network using internet technique in accordance with the present invention.
Fig. 4 shows contents of the data collected from an information viewer, in accordance with the present invention.
Figs. 5A to 5D represent contents of the data collected by the information collecting system on a network using internet technique of the present invention.
Figs. 6A to 6D represent contents of the data collected by the information collecting system on a network using internet technique of the present invention.
Fig. 7 shows an example of the data collected by the information collecting system of the present invention.

### Best Mode for Carrying Out the Invention

Best mode of the present invention will be described in the following with the reference to the figures.

### (1) First Embodiment

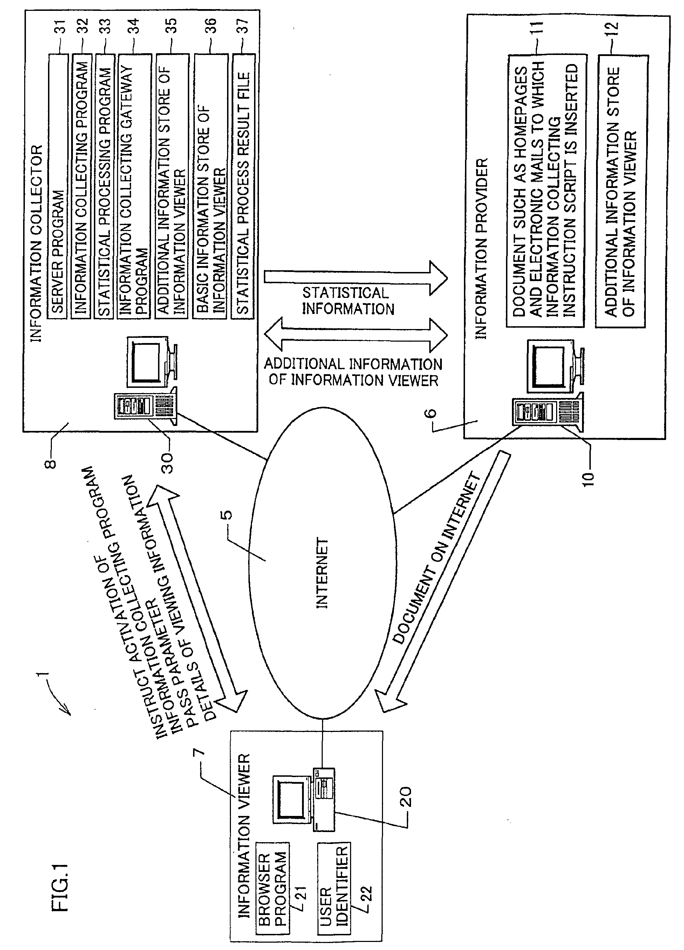

Fig. 1 is a schematic diagram of a network system on the Internet as an example of the network environment using the internet technique to which the present invention is applied. Referring to Fig. 1, the network system 1 on the Internet in accordance with the first embodiment of the present invention includes servers of a plurality of information providers, clients 7 of a plurality of information viewers, and a server 8 of an information collector, which are connected to Internet 5. In Fig. 1, for simplicity of description of network system 1, an example is shown in which only one server 10 of an information provider 6 and one client 20 of an information viewer 7 are connected, respectively.

Information provider 6 includes a server 10, which is connected to the Internet 5 and holds documents 11 such as homepages and electronic mails provided by the information provider to which an information collecting instruction script provided by an information collector 8 is inserted, and an additional information store 12 of information viewers for storing additional information of the information viewers, which will be described later as needed. Therefore, it is possible to provide information of the document on the internet such as the homepage or the electronic mail upon request of the information viewer or to distribute information upon request by the information provider on the Internet 5.

Client 20 of information viewer 7 is a computer, which is connected to the Internet and holds a browser program for viewing documents on the Internet 5 such as home pages and electronic mails. The browser program allows the information viewer 7 to view, by designating an URL (Uniform Resource Locator) as an address indicative of the location of the information of the document provided by the information provider 6, or to view document distributed to the information viewer 7 from the information provider 6.

Server 30 of information collector 8 is a computer having a basic information store 36 of an information viewer that obtains and holds an URL of a home page of information provider 6 viewed by the information viewer 7, an URL of a homepage viewed before visiting the homepage of the provider, type of the browser program and the type of the client used for browsing, frequency and time of past viewing, and IP address browsing information used for accessing by the information viewer 7.

Here, the URL of the homepage, the URL of another homepage viewed before viewing the first mentioned homepage, the type of the browsing program and type of the client used for browsing, time and IP address used for accessing by the information viewer 7 are collected in the server 8 of the information collector in the following manner. Specifically, according to RFC (Request For Comment, at ftp://ftp. nic. ad. jp. /rfc) as a basic document of the Internet, when the browser program of the information viewer accesses to server 10 of information provider and views information, the above described items are normally notified to the access destination server. In the present invention, however, when the browser program of the information viewer accesses to the server 10 of information provider and views information, by the information collecting script, the browser program instructs a server program of the information collector to execute the information collecting program in the server of the information collector. At this time, the above described contents are passed to the server of the information collector, and server 30 of the information collector holds the contents. As to the viewing time, the time while the information collecting program is active, that is, the time for the browser program to analyze and display the contents of the page is held.

As to the presence/absence and frequency of past viewing, when the information viewer first views the page of the information provider, information collecting program transmits a user identifier 22 inherent to the information viewer to the browser program of the information viewer, which identifier is semi-permanently maintained in the browser program (magnetic storing apparatus of the client). User identifier 22 inherent to the information viewer is determined to return the same contents only when the server that has transmitted the user identifier 22 is accessed, by substantially standard specification of the Internet. Therefore, by counting the number of viewing for every user identifier 22 inherent to the information viewer at a second and the following accesses, it is possible to obtain the information as to absence/presence and frequency of past viewing.

Server 30 is a computer further having: an information collecting program 32 collecting these pieces of information from information viewer 7 and storing the collected information in basic information store 36 of the information viewer: a server program 31 receiving an activation instruction of information collecting program 32 issued by the browser program of information viewer 7 interpreting the information collecting script, a parameter including an identifier inherent to each information provider 6 and part of viewing information, and details of viewing information, and passing the parameter and details of the viewing information to activate the information collecting program 32; an additional information store 35 of the information viewer holding additional information such as sex, age, occupation and the like of the information viewer 7 obtained by information provider 6 or information collector 8; an additional information collecting gateway program 34 obtaining such additional information of the information viewer 7; a statistical processing program 33 performing statistical processing based on access time, access frequency, region, homepage viewing time, transitions made during homepage browsing and number of re-visiting based on the obtained viewing information; and a statistical processing result file storing the statistically processed data. The server is connected to the Internet 5 together with a server 10 of the information provider 6 and client 20 of the information viewer 7.

In the network system 1 configured as described above, an information collecting instruction script is inserted to the HTML constituting the documents on the Internet 5 such as the homepages and electronic mails provided by the information provider 6 through server 10 of information provider 6. Therefore, when information viewer 7 views information using the browser program on client 20, the viewing information is collected by information collecting program 32 executed by server 30 of information collector 8.

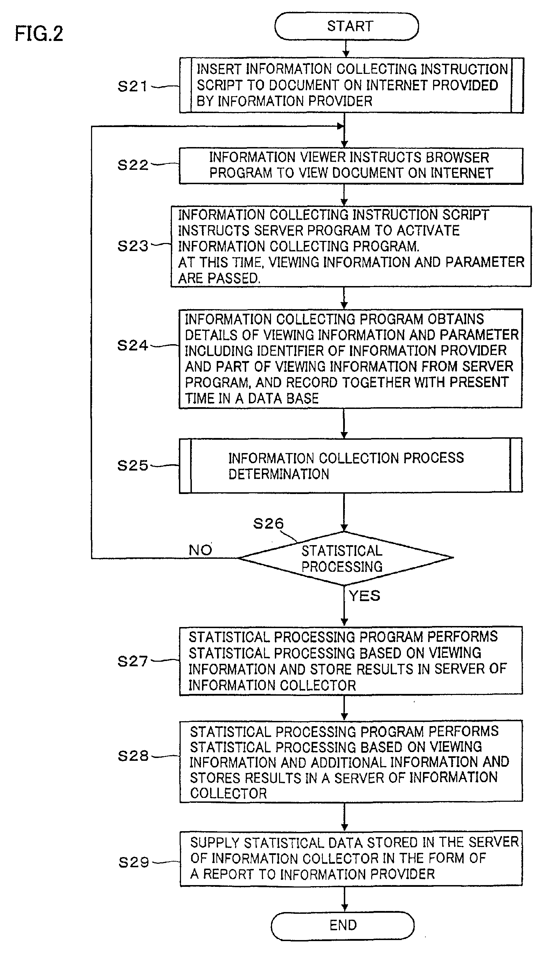

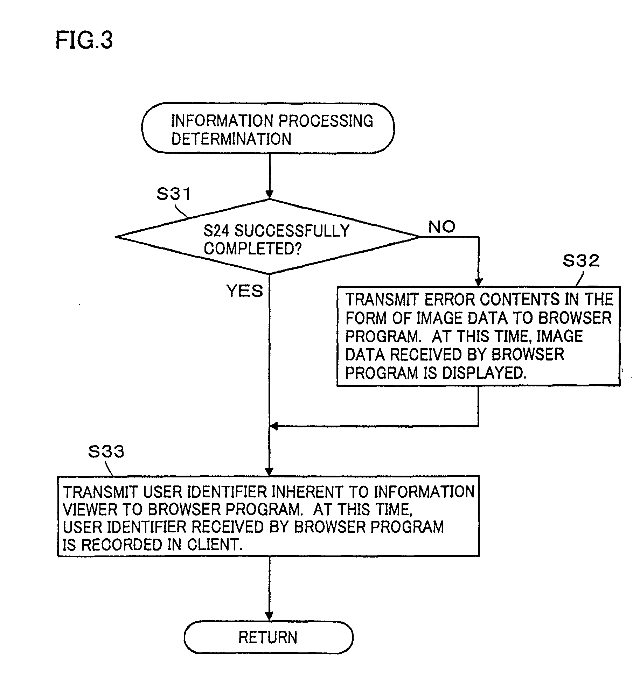

The process procedure for collecting information of the viewing state of homepages and electronic mails as the document on the Internet 5, in accordance with the operation of the present embodiment, will be described with reference to Figs. 2 and 3.

First, the information collecting instruction script provided by information collector 8 is inserted to a document on the Internet 5 such as a homepage or an electronic mail stored in server 10 of information provider 6 in advance. The information collecting instruction script stores: the step of activating the information collecting program 32 stored in server 30 of the information collector; a parameter including an identifier inherent to each information provider 6 and part of viewing information; the step of passing the parameter to information collecting program 32 stored in server 30 of information collector 8; and the step of displaying, as an image, result of execution of the information collecting program 32 operating on the side of the information collector 8. The information collecting instruction script is licensed by information collector 8 to information provider 6.

The steps will be described one by one with reference to Figs. 2 and 3. First, information provider 6 inserts the information collecting instruction script provided by information collector 8 into the HTML (Hyper Text Markup Language) constituting the document on the Internet 5 such as a homepage or an electronic mail written in the server 10 of information provider 6 (step S21, hereinafter, the term step will be omitted).

In S22, information viewer 7 provides viewing instruction with the browser program, for viewing a document on the Internet 5 such as a homepage or an electronic mail provided by information provider 6. For example, when the document is a homepage, the URL as an address indicative of the location of the information is instructed to the browser program, whereby viewing of the homepage becomes possible.

In S23, by the browser program for browsing document on the Internet 5 such as homepages and electronic mails, the document of which viewing is instructed in S22 is input and analyzed, and in this process, the information collecting instruction script inserted to the HTML constituting the document is also analyzed at the same time. As a result of analysis of the information collecting script, activation of the information collecting program 32 stored in server 30 of information collector 8 is instructed to the server program of server 30 of information collector 8 and, at the same time, details of viewing information necessary for the information collecting program 32, parameters including an identifier inherent to the information provider and part of the viewing information, a user identifier inherent to the information viewer and like are passed to server program 31 of server 30 of information collector 8.

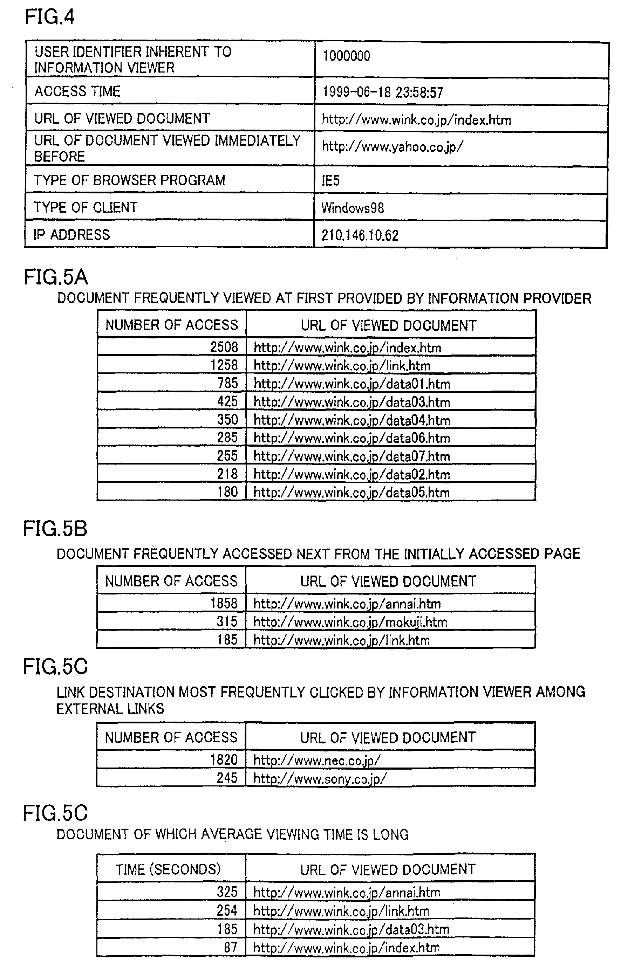

In S24, the information collecting program 32 activated by server 30 of information collector 8 obtains, from the server program 31 of the server of information collector 8, the detailed information of the viewing information of information viewer 7, the identifier inherent to the information provider 6, parameter passed from the information collecting instruction script as a part of the viewing information and user identifier inherent to the information viewer received from the browsing program in S23. These pieces of viewing information are recorded in basic information store 36 of information viewer of the recording medium in server 30 of information collector 8, together with the present time. As the recorded information, user identifier 22 inherent to information viewer 7, viewing time, an address of the document on the Internet 5 such as the URL of the viewed homepage on the Internet 5 or an identifier of the viewed mail, an address of a document on the Internet 5 such as the URL of the homepage viewed before the last mentioned homepage, the type of the browser program used for viewing and the type of client used for viewing, an IP address of the Internet 5 to which the client of the information viewer is connected are held correspondingly, as shown, for example, in Fig. 4.

Referring to Fig. 4, it can be seen that the user identifier 22 inherent to information viewer 7 is 1000000, that the document at http:// www.yahoo.co.jp was viewed immediately before, and thereafter, the document at http://www.wink.co.jp/index.htm was viewed at 23: 58: 57 on June 18, 1999, using client type Windows 98 and browser program IE5.

Returning to Fig. 2, in S25, whether the information collecting process of S24 described above has been successfully completed or not is determined. This determining process will be described with reference to Fig. 3.

Fig. 3 is a flow chart representing the contents of the information collection processing determination shown in S25 of Fig. 2. Referring to Fig. 3, first, in S31, whether the information collecting process has been successfully completed or not is determined. When there is any error such as unsuccessful determination of information collecting process (NO in S31), information collecting program 32 activated in server 30 of information collector 8 provides error information as image data, to the browser program executed by client 20 of information viewer 7. Thereafter, the image data is displayed by the browsing program executed in client 20 of information viewer 7 (S32).

When it is determined that the operation terminated successfully in S31 (YES in S31) and when the step of S32 is completed, user identifier 22 inherent to information viewer 7 is issued to browser program when the user identifier 22 inherent to information viewer 7 is not included in the details of the viewing information obtained in S23, and the browser program, upon reception, records the identifier in client 20 of information viewer 7 (S33).

Returning to Fig. 2, the steps S22 to S25 are repeated every time information provider 6 instructs execution of the statistical processing program to server program 30 of information collector 8 (NO in S26), that is, every time the information viewer views document on the internet such as a homepage or an electronic mail.

Next, when information provider 6 instructs execution of the statistical process program to server program 31 of information collector 8, or when information collector 8 or information provider 6 designates instruction of executing the statistical process program at every prescribed time period such as weekly or monthly in the server program 31 of information collector 8 and the time period has passed (YES in S26), the statistical process program is executed in server 30 of information collector 8, in which viewing information held in step S25 is entered, statistical processing is performed thereon and the results are stored in server 30 of information collector 8 (S27).

The additional information of the information viewer will be described. When the information viewer 7 has registered additional information such as sex, age, occupation and the like with either the server 10 of information provider 6 or server 30 of information collector 8 by the additional information collecting gateway program 34 that operates on server 30 of information collector 8, the additional information is automatically stored in additional information store 35 of the information viewer in server 30 of information collector 8. Statistical processing based on sex, age, occupation and the like including the additional information is performed, and results are stored in server 30 of information collector 8. Further, when past use of service or purchasing of products by information viewer 7 through documents on Internet 5 such as homepages and electronic mails provided by information provider 6 has been acquired as additional information by server 10 of information provider 6 or server 30 of information connector 8, or information of individual information viewer 7 obtained through means other than those mentioned above has been acquired as additional information, by additional information collecting gateway program 34 operating on server 30 of information collector 8, the additional information is also stored in additional information store 35 of information viewer of server 30 of information collector 8. Statistical processing based on purchaser by purchaser, service user by user or the like is performed including the additional information, and the results are stored in server 30 of information collector 8 (S28).

In step S29, the statistical information stored in server 30 of information collector 8 is supplied in the form of a report, to information provider 6 as a document on the Internet 5 such as a homepage or an electronic mail or a document recorded on other storage medium.

As described above, by the information collecting instruction script inserted to the HTML constituting a document on Internet 5 such as a homepage or an electronic mail provided by information provider 6 and the process procedure by the information collecting program 32 executed in server 30 of information collector 8, details of the viewing information viewed by the information viewer 7 are obtained in server 30 of information collector 8. Based on the obtained viewing information, statistical processing is performed, and the statistical information can be automatically stored in the statistical process result file 37 of server 30 of information collector 8.

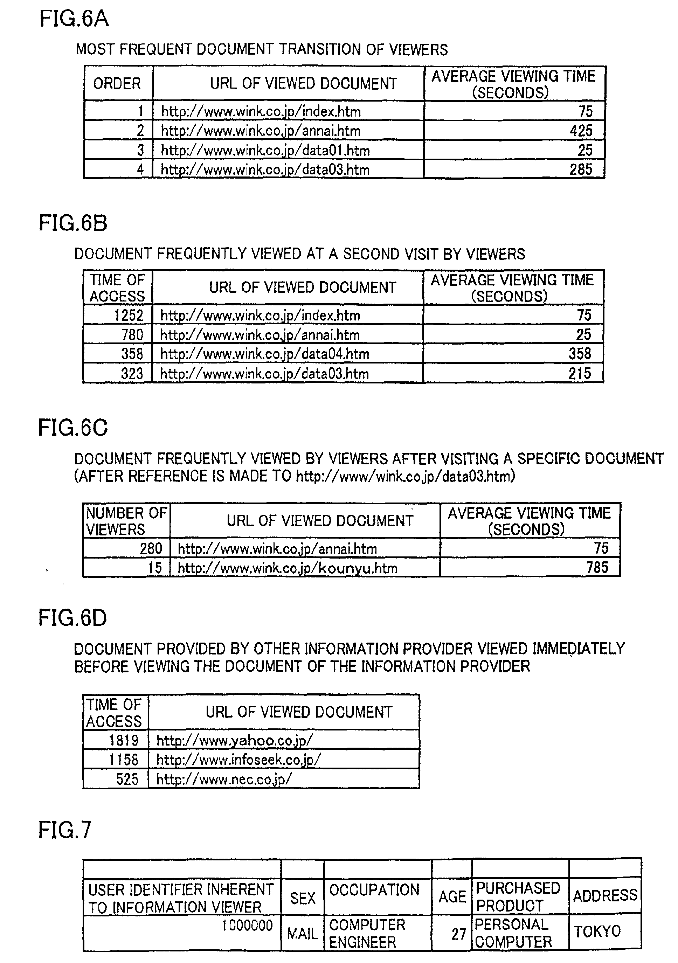

Next, the stored information will be described. Figs. 5A to 5D and 6A to 6D represent contents of the stored statistical information. Referring to these figures, it can be understood that the document which is most frequently viewed first by the information viewers is http://www.wink.co.jp/index.htm (Fig. 5A) and most of the viewers next views the document at http://www.wink.co.jp/annai.htm (Fig. 5B). Average viewing time of this document is the longest, and therefore, it is assumed that the contents of the document is viewed intensively by the information viewer 7 (Fig. 5D).

Further, the viewer moves from this document to the next document at http://www.wink.co.jp/data01/htm (Fig. 6A, order 3), of which average viewing time is 25 seconds, that is, not very long. This site is hardly viewed in the next visit (not listed on Fig. 6B), and therefore it shows that though the link title of the document attracts attention of information viewers 7, the contents of the document was not interesting to the information viewers 7. By contrast, the document which is frequently viewed in the transition thereafter is at http://www.wink.co.jp/data03.htm (Fig. 6A, order 4) has the average viewing time as long as 285 seconds. In addition, it is viewed in the second visit and average viewing time is long (Fig. 6B). Therefore, it can be understood that a large number of information viewers 7 are interested in this document. Among information viewers 7 who visited for viewing the document via another site, the largest number of information viewers 7 have viewed http://www.yahoo.co.jp/ immediately before (Fig. 6D) and at the same time, it is understood that as this site is a search engine, this search engine drives the largest number of visitors to the document.

The next site, http://www.nec.co.jp/ (Fig. 6D) is a general company site. It is the case that large number of information viewers visit this site though it does not have any link to the above described site and that reference to http://www.nec.co.jp/ is frequently made as external link destination (Fig. 5C). Considering these generally, it is understood that an information viewer 7 visited an external link destination returns for repeated viewing through a method such as pressing a return button to the previous page of the browser program, that is, not through the link.

Further, the document at http://www.wink.co.jp/data0.3.htm is an order form for purchasing a product. By counting the number of viewers who viewed the document, the number can be known. By comparing the number with the number of users who actually ordered, it is also possible to know the ratio of viewers who actually ordered with respect to the viewers of the order form document.

As described above, when the automatically stored statistical information is given in the from of a report, such an analysis as described above is partially added and supplied to information provider 6, whereby the information can be used for improving the method of providing documents on the Internet such as homepages and electronic mails by the information provider.

It is also possible to add other information and perform statistical processing on server 30 of information collector 8. Examples are as follows.
(1) By the additional information collecting gateway program 34 operating on server 30 of information collector 8, information viewer 7 records additional information such as sex, age, occupation and the like in server 10 of information provider 6 or server 30 of information collector 8, and the additional information is stored in server 30 of information collector 8;
(2) By the additional information collecting gateway program 34 operating on server 30 of information collector 8, actual purchase of product or actual use of services in the past of the information viewer 7 is registered as additional information in server 10 of information provider 6 or server 30 of information collector 8, and the additional information is stored in server 30 of information collector 8; and
(3) Information for individual information viewer 7 obtained through other means is obtained as additional information and stored in server 30 of information collector 8.

In the above described examples, as the details of the viewing information together with the additional information are statistically processed, it becomes possible to obtain more detailed statistical information including attributes of the information viewer 7 in addition to the previous statistical information and store the obtained information in server 30 of information collector 8. It can be utilized not only for improvement of the method of providing documents on the internet such as homepages and electronic mails provided by the information provider 6 but also for direct marketing to information viewers 7.

Here, the process executed by the additional information collecting gateway program 34 when the additional information is collected will be summarized. The additional information collection gateway program 34 is executed when an information viewer 7 uses a form for entering additional information such as a questionnaire presented on the Internet 5 such as homepages or electronic mails, when an information viewer 7 orders a product or uses a service through a document on the Internet such as homepages and electronic mails, or when an information viewer 7 utilizes a service provided by information provider 6, and the program serves to store the additional information in the server of the information collector. In the additional information collecting gateway program 34, the information collecting program 32 activated in the server 30 of previous information collector 8 transmits a signal to client 20 of information viewer 7, browser program 21 of client 20 of information viewer 7 obtains user identifier 22 inherent to information viewer 7 recorded in client 20 of information viewer 7, and stores the same together with the simultaneously obtained additional information data in server 30 of information collector 8.

The stored additional information store 35 of the information viewer will be described. Fig. 7 shows an example of the stored additional information store 35 of the information viewer. The additional information store 35 of the information viewer and the basic information store 36 of the information viewer shown in Fig. 4 obtained in server 30 of information collector 8 representing details of the viewing information of viewed by the information viewer 7 are compared for matching with reference to the user identifier 22 inherent to information viewer 7, and hence it is possible to form statistical information including attribute inherent to the information viewer in addition to the statistical information, such as shown in Figs. 5A to 5D and 6A to 6D. For example, it is possible to store statistical data shown in Fig. 5A separately for men and women, as shown in Fig. 7.

Though embodiments of the present invention have been described, the present invention is not limited to collection of viewing information of information viewers 7 of documents on the Internet 5 such as home pages and electronic mails provided by the information provider, and the present invention is also applicable to collection of viewing information of information viewers 7 of documents provided in HTML or XML as an extended language of HTML. For example, the present invention is applicable to correct viewing information of information viewers 7 on an intranet.

Though an example using a browser program has been described in the embodiments above, the browser program is not limited to a so called browser software, and it includes a mailing software, Adobe Acrobat for forming and viewing a PDF file or Microsoft Word.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An information collecting system on a network using internet technique to which a server of an information provider, a client browsing the server of said information provider and a server of an information collector are connected, comprising:
means for inserting an information collecting instruction to information of the server of said information provider provided by itself; wherein
said information collecting server includes means for collecting, when said client accesses to the server of said information provider and views information, viewing information of said client in accordance with said inserted instruction, and means for storing said collected data.

2. The information collecting system on a network using internet technique according to claim 1, further comprising
means for statistically processing data collected by said viewing information collecting means and additional information, wherein
said storing means stores said statistically processed data.

3. The information collecting system on a network using internet technique according to claim 1, wherein
the server of said information collector has a gateway program collecting prescribed information; and
when said client accesses to the sever of said information provider and views information, additional information related to said client may be entered, and the server of said information collector collects and stores said additional information entered by said client, using said gateway program.

4. The information collecting system on a network using internet technique according to claim 3, wherein
said collected and stored additional information entered by said client is stored in the server of said information provider.

5. A method of collecting information on a network using internet technique to which a server of an information provider, a client viewing the server of said information provider and a server of an information collector are connected, comprising the steps of:
inserting a prescribed information collecting instruction to information provided by said information provider;
when said client accesses to the server of said information provider and views information, collecting, at the server of said information collector, viewing information of said client in accordance with said inserted instruction; and
storing said collected data in the server of said information collector.

6. A recording medium readable by a server of an information provider on a network using internet technique to which the server of said information provider, a client viewing the server of said information provider and a server of an information collector are connected, recording a method of collecting information on the network using internet technique, causing the server of said information provider to transmit, among information provided by said information provider, information that said client has accessed to the server of said information provider and viewed information, to said information collecting server.

7. The recording medium recording a method of collecting information on a network using internet technique according to claim 6, wherein
said recording medium is readable by the server of said information collector, and causes, when information that said client has accessed to said information providing server and viewed information is transmitted to said information collecting server, said transmitted viewing information of the server of said information provider to be recorded on the server of said information collector.

8. An information providing server accessible from a client computer through a network,
additionally connected to an information connecting server through said network, and comprising means for inserting an information collecting instruction to information provided by itself; wherein
said information collecting instruction is to collect, when said client accesses to said information providing server and views information, viewing information of said client and to store the collected information in said information collecting server.

9. An information collecting server connected to a client computer and to an information providing server through a network, wherein
a prescribed information collecting instruction is inserted in information provided by said information providing server;
said information collecting server comprising
means for storing, when said client accesses to said information providing server and views information, viewing information of said client transmitted by said information collecting instruction.

10. The information collecting server according to claim 9, further comprising means for statistically processing said viewing information, wherein
said storing means stores said statistically processed data.

## Amended claims

### Amended claims under Art. 19.1 PCT

1. (Amended) An information collecting system on a network using internet technique to which a server of an information provider, a client browsing the server of said information provider and a server of an information collector are connected, comprising:
means for inserting an information collecting instruction script to information of the server of said information provider provided by itself; wherein
said information collecting server includes means for collecting, when said client accesses to the server of said information provider and views information, collecting viewing information of said client in accordance with said inserted instruction, and means for storing said collected data.

2. The information collecting system on a network using internet technique according to claim 1, further comprising
means for statistically processing data collected by said viewing information collecting means and additional information, wherein
said storing means stores said statistically processed data.

3. The information collecting system on a network using internet technique according to claim 1, wherein
the server of said information collector has a gateway program collecting prescribed information; and
when said client accesses to the sever of said information provider and views information, additional information related to said client may be entered, and the server of said information collector collects and stores said additional information entered by said client, using said gateway program.

4. The information collecting system on a network using internet technique according to claim 3, wherein
said collected and stored additional information entered by said client is stored in the server of said information provider.

5. (Amended) A method of collecting information on a network using internet technique to which a server of an information provider, a client viewing the server of said information provider and a server of an information collector are connected, comprising the steps of:
inserting a prescribed information collecting instruction script to information provided by said information provider;
when said client accesses to the server of said information provider and views information, collecting, at the server of said information collector, viewing information of said client in accordance with said inserted instruction script; and
storing said collected data in the server of said information collector.

6. (Amended) A recording medium readable by a server of an information provider on a network using internet technique to which the server of said information provider, a client viewing the server of said information provider and a server of an information collector are connected, recording a method of collecting information on the network using internet technique, causing the server of said information provider to transmit, by inserting an information collecting instruction script among information provided by said information provider, information that said client has accessed to the server of said information provider and viewed information, to said information collecting server.

7. The recording medium recording a method of collecting information on a network using internet technique according to claim 6, wherein
said recording medium is readable by the server of said information collector, and causes, when information that said client has accessed to said information providing server and viewed information is transmitted to said information collecting server, said transmitted viewing information of the server of said information provider to be recorded on the server of said information collector.

8. (Amended) An information providing server accessible from a client computer through a network,
additionally connected to an information connecting server through said network, and comprising means for inserting an information collecting instruction script to information provided by itself; wherein
said information collecting instruction script is to collect, when said client accesses to said information providing server and views information, viewing information of said client and to store the collected information in said information collecting server.

9. (Amended) An information collecting server connected to a client computer and to an information providing server through a network, wherein
a prescribed information collecting instruction script is inserted in information provided by said information providing server;
said information collecting server comprising
means for storing, when said client accesses to said information providing server and views information, viewing information of said client transmitted in accordance with said information collecting instruction script.

10. The information collecting server according to claim 9, further comprising means for statistically processing said viewing information, wherein
said storing means stores said statistically processed data.
